# EUROPÄISCHE PATENTSCHRIFT

(11) **EP 0 865 559 B1**
(45) Veröffentlichungstag und Bekanntmachung des Hinweises auf die Patenterteilung: **28.08.2002**
(21) Anmeldenummer: 96943961.1
(22) Anmeldetag: 14.12.1996
(51) Int. Cl.: E06B 3/263

(54) **FENSTER ODER TÜR AUS EINEM KERN AUS SCHAUMSTOFF ENTHALTENDEN PROFILEN**
WINDOW OR DOOR MADE FROM A CORE CONSISTING OF FOAM-CONTAINING SECTIONS
FENETRE OU PORTE FORMEES D'UN NOYAU COMPOSE DE PROFILES CONTENANT DE LA MOUSSE

(30) Priorität: 15.12.1995 DE 19546678
(43) Veröffentlichungstag der Anmeldung: 23.09.1998
(73) Patentinhaber: eurotec GmbH, 54516 Wittlich-Wengerohr (DE)
(72) Erfinder: Pazen, Günter, 54492 Zeltingen-Rachtig (DE)
(74) Vertreter: Müller-Gerbes, Margot, Dipl.-Ing.
(86) Internationale Anmeldenummer: EP9605624
(87) Internationale Veröffentlichungsnummer: WO97022779

(56) Entgegenhaltungen:
- WO-A-92/01853
- AT-B- 387 067
- AT-B- 387 259
- DE-A- 2 065 035
- DE-A- 3 514 540
- DE-A- 4 131 511
- DE-A- 4 321 702

## Beschreibung

Die Erfindung befaßt sich mit einem Fenster oder einer Tür mit Blendrahmen, Flügelrahmen und in den Blendrahmen oder Flügelrahmen eingesetzter mittels Glasleiste gehaltener Verglasung, wobei die Blendrahmen und Flügelrahmen aus auf vorgegebene Maße abgelängten und durch Verbinden an den Ecken zu den Rahmen zusammengefügten Blendrahmenprofilen bzw. Flügelrahmenprofilen hergestellt sind und die Blendrahmen- bzw. Flügelrahmenprofile einen Kern aus geschlossenzelligem Hartschaumstoff aufweisen und der Kern zumindest auf der Außenseite und der Innenseite mit einer äußeren bzw. inneren Schale aus Holz, Aluminium oder Kunststoff abgedeckt ist und der Kern des Blendrahmenprofiles bzw. Flügelrahmenprofiles jeweils auf seiner dem Flügelrahmen bzw. Blendrahmen zugewandten Falzseite mit einer von der äußeren Blendrahmenschale bis zur inneren Blendrahmenschale bzw. von der äußeren Flügelrahmenschale bis zur inneren Flügelrahmenschale reichenden Blendrahmenfalzschale bzw. Flügelrahmenfalzschale abgedeckt ist und die Blendrahmenfalzschale gegebenenfalls mit einer angeformten äußeren Anschlagdichtung und / oder einer angeformten Mitteldichtung ausgestattet ist.

Fenster mit Profilelementen umfassend einen Kern aus Schaumstoff sowie zumindest bereichsweise eine Ummantelung mit Schalen aus Holz oder Kunststoff oder Metall sind beispielsweise aus der DE 37 07 275 A1, AT 387067 B, DE 26 11 943 A1 oder EP 0373 371 A1 bekannt.

Aus der DE 4131511 A1 ist ein Verbundprofil aus zwei Metallprofilteilen bekannt, die mittels Kunststoffisolierstegen, die in Nuten der Metallprofilteile gehalten sind, untereinander fest verbunden werden, wobei ein Hohlraum zwischen den Isolierstegen mit geschäumtem oder ungeschäumtem Kunststoff ausgefüllt ist. Derartige Verbundprofile weisen nur übliche Wärmedämmwerte wegen des geringen isolierenden Bereiches auf.

Aus der DE 35 14 540 A1 sind Rahmungen für Verglasungen bekannt, die aus mehreren Profilteilen aus Metall bzw. Kunststoff bestehen, wobei ein am Rand der Verglasung angrenzender Raum mit einem wärmedammenden Material ausgefüllt ist.

Ein gattungsgemäßes Fenster ist aus der WO-A-9201853 bekannt, wobei die Profile für die Flügelrahmen und Blendrahmen bevorzugt aus äußeren Holzschalen für die Sichtflächen mit einem dazwischen angeordneten plattenförmigen Isolationselement aus Hartschaum bestehen, wobei die Teile miteinander verklebt werden. Zur Abdichtung des Falzes zwischen Blendrahmen und Flügelrahmen ist eine Lippendichtung vorgesehen, die zur Wetterseite mittels eines weiteren Profiles insbesondere aus Aluminium mit einem Wetterschenkel für den Regenablauf abgedeckt ist. Durch dieses zur Abdeckung benötigte Profil wird jedoch eine Kältebrücke geschaffen, in deren Bereich der wärmedämmende Effekt entfällt. Fensterrahmen gemäß WO-A-9201853 erreichen einen K-Wert von etwa 0,8.

Der Erfindung liegt die Aufgabe zugrunde, Fenster und Türen mit Rahmen mit hohen Wärmedämmwerten und guter Schalldämmung zu schaffen, wobei die Wärmedämmwerte insbesondere der Fensterrahmen weiter verbessert werden sollen.

Erfindungsgemäß wird zur Lösung dieser Aufgabe vorgeschlagen, daß die Blendrahmenfalzschale und die Flügelrahmenfalzschale jeweils einseitig in einer Aufnahmenut der äußeren Schale des Blendrahmenprofils bzw. der inneren Schale des Flügelrahmenprofils formschlüssig gefaßt sind und daß das die Glasleiste bildende Profil eine Zumindest die sichtflächen umfassende äußere schale und einen mit der Schale haftfest verbundenen Kern aus geschlossenzelligen Schaumstoff aufweist und einen hohen Glaseinstand zur Vermeidung einer Kältebrüche im Bereich des Glasrandverbundes ermöglich und die Kerne für das Blendrahmenprofil und das Flügelrahmenprofil und die glasleiste aus einem Hartschaumstoff mit einer Druckfestigkeit nach DIN 53421 von mindestens 0,40 N/mm², vorzugsweise mindestens 0,50 N/mm², und einer Zugfestigkeit nach DIN 53292 von mindestens 0,7 N/mm², vorzugsweise größer 0,8/mm², und einem Rechenwert der Wärmeleitfähigkeit nach DIN 4108 unter 0,040 W/mK und einer Wasseraufnahme in sieben Tagen Wasserlagerung nach DIN 53428 von kleiner 2 Volumen-% gefertigt sind, wie einem Polyurethan-Hartschaum oder extrudierten Polystyrol-Hartschaum, und der Fensterrahmen mit einem Wärmedurchgangskoeffizienten bis unter 0,7 W/m²K aufweist.

Mit Hilfe der Blendrahmenfalzschale bzw. Flügelrahmenfalzschale gelingt es, den für Wärmedämmfenster erforderlichen hochwärmedämmenden inneren Hartschaumkern der Profile mit einer funktionalen Schale auch außerhalb der Wetterseite bzw. Sichtseite auszurüsten. Ebenso ist es in einem weiteren Vorschlag der Erfindung möglich, daß der Kern des Flügelrahmenprofiles auf seiner der Verglasung zugewandten Seite mit einem von der äußeren Flügelrahmenschale bis zur inneren Flügelrahmenschale reichenden Glasfalzschale abgedeckt ist. Auf diese Weise ist auch der hochwärmedämmende Kern der Profile allseits gegenüber Witterungseinflüssen und Wasser und Feuchtigkeit geschützt. Für die Ausbildung der Blendrahmenfalzschale, Flügelrahmenfalzschale und Glasfalzschale kommen insbesondere witterungsbeständige thermoplastisch verarbeitbare und extrudierbare Kunststoffe, wie EPDM (Ethylenpropylendienterpolymere), Polyamide, PVC (Polyvinylchlorid) oder auch glasfaserverstärkte Kunststoffe in Frage. Insbesondere werden Falzschalen als Profile durch Extrusion hergestellt und werden dann mit dem Schaumstoffkern und den übrigen Schalenteilen zu dem gewünschten kombinierten wärmegedämmten mehrschichtigen Profil verbunden.

In Weiterbildung der Erfindung ist insbesondere vorgesehen, daß die Falzschalen je nachdem, ob sie am Flügelrahmenprofil oder am Blendrahmenprofil angeordnet sind, auch mit entsprechenden funktionalen Teilen, insbesondere Dichtungen integriert ausgebildet sind. Insbesondere wird vorgeschlagen, die Blendrahmenfalzschale mit einer angeformten äußeren Anschlagdichtung und einer angeformten Mitteldichtung auszustatten und die Flügelrahmenfalzschale mit einer angeformten inneren Anschlagdichtung und gegebenenfalls einer Mitteldichtung auszustatten und die Glasfalzschale mit einer angeformten äußeren Anschlagdichtung zum Anliegen an der Verglasung auszustatten. Hierbei können die angeformten Dichtungen aus dem gleichen Material wie die Falzschalen selbst bestehen, sofern für diese ein ausreichend elastisches Material, wie beispielsweise Gummi, EPDM, Synthesekautschuk oder dergleichen eingesetzt ist. Für den Fall jedoch, daß die Falzschalen aus einem härteren Kunststoff oder glasfaserverstärkten Kunststoff hergestellt sind, können die Dichtungen aus einem weichelastisch eingestellten Material, beispielsweise Weich-PVC, oder auch einem der vorgenannten Kunststoffe bestehen und bei der Herstellung der Profile für die Falzschalen mit anextrudiert und angeformt werden.

Für einen mechanischen formschlüssigen Verbund der Falzschalen mit dem jeweiligen Kern aus Hartschaum zum Herstellen der Blendrahmenprofile, Flügelrahmenprofile oder Glasleisten, wird vorgeschlagen, an den einander zugewandten Seiten der Schalen bzw. Kerne für einen Formschluß Nuten und/oder Stege auszubilden und insbesondere auch an den Falzschalen Verankerungsstege zum Verankern in dem Schaumstoffkern auszubilden.

Für die Herstellung von wärmegedämmten Holzfenstern werden Flügelrahmenprofile und Blendrahmenprofile eingesetzt, deren äußere und innere Schalen aus Holz gefertigt sind und bei denen in Weiterbildung der Erfindung auch die Falzschalen aus Holz gefertigt sind. Hierbei wird dann vorgesehen, daß ein kombiniertes sowohl das Mitteldichtungsprofil als auch eine äußere Anschlagdichtung aufnehmendes Dichtungsprofil aus einem gummiartigen elastischen Material, wie EPDM, Silicon, Weich-PVC, Gummi, vorgesehen ist und mit der Blendrahmenfalzschale aus Holz fest verbunden ist, um die Dichtungsfunktionen beim Anschlag des Flügelrahmens an dem Blendrahmen zu übernehmen. Zusätzlich kann der Flügelrahmen noch mit einer inneren Anschlagdichtung ausgestattet sein.

Eine weitere Kombination eines wärmegedämmten Holzfensters geht von Blendrahmenprofilen und Flügelrahmenprofilen aus, deren äußere und innere Schalen aus Holz bestehen und bei dem die Kerne an den Falzseiten mit Blendrahmenfalzschale bzw. Flügelrahmenfalzschale bzw. Glasfalzschale aus einem thermoplastischen extrudierbaren Kunststoff oder natürlichen oder Synthesekautschuk oder Gummi oder glasfaserverstärkten Kunststoff gefertigt sind. Bei dieser Kombination von Blendrahmenprofilen und Flügelrahmenprofilen können alle erforderlichen Dichtungen, sowohl die inneren als auch die äußeren Anschlagdichtungen, die Mitteldichtung und auch die Glasanschlagdichtung integral an den Falzschalen angeformt sein.

Hochwärmegedämmte Kunststoffenster sind bevorzugt aus Blendrahmen und Flügelrahmenprofilen zusammengesetzt, die einen Hartschaumstoffkern aufweisen, mit äußeren und inneren Schalen aus Kunststoff, vorzugsweise Kunststoffhohlprofilen, sowie zusätzlichen Falzschalen für das Blendrahmenprofil und das Flügelrahmenprofil sowie einer Glasfalzschale, die vorzugsweise aus einem zugleich die Abdichtungsfunktion übernehmenden Werkstoff, wie EPDM oder Synthesekautschuk oder Gummi, hergestellt sind, ausgerüstet sind. Auch eine Kombination von Holz und Kunststoff ist für ein Wärmedämmfenster gemäß der Erfindung möglich, bei dem nämlich die Blendrahmenprofile und Flügelrahmenprofile einen Schaumstoffkern umfassen, der wetterseitig bevorzugt mit einer Schale aus Kunststoffprofil und rauminnenseitig mit einer Schale aus Holz abgedeckt ist und an den Falzseiten mit Falzschalenprofilen ausgekleidet ist, die vorzugsweise integrierte Dichtungen, nämlich innere und/oder äußere Anschlagdichtungen und gegebenenfalls eine Mitteldichtung aufweisen.

Die erfindungsgemäße wärmegedämmte Glasleiste ermöglicht auch einen erhöhten Glaseinstand und vermeidet damit die bei herkömmlichen Fensterkonstruktionen auftretende Kältebrücke im Bereich des Glasrandverbundes.

Die Blendrahmenprofile, Flügelrahmenprofile und Glasleisten werden durch haftfestes Verbinden des Kerns aus Schaumstoff mit den äußeren und/oder inneren Schalen und gegebenenfalls den falzseitigen Schalen mittels eines Klebemittels hergestellt. Als Klebemittel kommen beispielsweise Einkomponentenkleber auf Polyurethanbasis, die feuchtigkeitsvernetzend sind, in Frage. Jedoch auch andere geeignete Klebemittel für die jeweiligen Materialkombinationen, wie sie handelsüblich angeboten werden, können für die Herstellung der erfindungsgemäßen wärmegedämmten Profile eingesetzt werden.

Insbesondere sind auch an den äußeren und inneren Schalen des Blendrahmenprofils und Flügelrahmenprofils an ihrer dem Kern zugewandten Seite Aufnahmenuten oder Absätze zum formschlüssigen Einsetzen des entsprechend profilierten Kernes ausgebildet. Ebenso können auch die Falzschalen sowohl mit Absätzen, Nuten und bevorzugt auch mit Verankerungsstegen an der dem Kern zugewandten Seite ausgebildet sein. Auch eine Verankerung der Falzschalen an den angrenzenden äußeren und inneren Schalen der Blendrahmenprofile und Flügelrahmenprofile mittels entsprechender Vorsprünge in entsprechenden Nuten der äußeren und inneren Schalen wird erfindungsgemäß vorgeschlagen.

Für eine Fixierung von Schrauben für Beschläge oder der Glasleiste oder der Verankerung des Blendrahmenprofils im Mauerwerk wird erfindungsgemäß vorgeschlagen, die Kerne zumindest des Blendrahmenprofils und gegebenenfalls auch des Flügelrahmenprofils mit eingearbeiteten Verstärkungseinlagen aus Holz oder Metall oder kompaktem Kunststoff zu verstärken.

Vorteilhafte Ausgestaltungen der Erfindung sind den kennzeichnenden Merkmale der Unteransprüche entnehmbar.

Bevorzugte Hartschaumstoffe sind solche, die eine hohe Druckfestigkeit, eine sehr geringe Wasseraufnahme, eine hohe Zugfestigkeit und eine niedrige Wärmeleitfähigkeit aufweisen.

Als Haftvermittler zwischen Holz und Hartschaumstoff eignen sich insbesondere Einkomponentenkleber auf Polyurethanbasis, die unter Feuchtigkeit vernetzen. Solche Klebstoffe beispielsweise mit Viskositäten bei Raumtemperatur von etwa 7500 mPa . s (nach DIN 53788 Epprecht) können dünn insbesondere auf das Holz aufgetragen werden, beispielsweise in einer Dicke von etwa 120 bis 170 g/m², und werden anschließend für einen längeren Zeitraum von mindestens 30 Minuten, vorzugsweise 60 Minuten und länger, bei Raumtemperatur verpreßt, wobei der Klebstoff abbindet und gegebenenfalls ausschäumt. Für eine verbesserte Verbindung zwischen Holz und Polystyrolhartschaum ist bei Einsatz eines Klebers auf Basis Polyurethan eine Primerung der Polystyroloberfläche möglich.

Erfindungsgemäß werden die Profile aus einem Kern aus Hartschaumstoff und einer Schale aus Holz so aufgebaut, daß ein möglichst einfach im wesentlichen rechteckig konfigurierter Hartschaumstoffkern vorgesehen wird, und die Holzschalen entsprechend den Oberflächenbereichen und Funktionen des Profiles für die Aufnahme von Dichtungslippen und Beschlägen profiliert werden. Beispielsweise ist es nicht erforderlich, beim Blendrahmenprofil die Maueranschlußseite des Blendrahmenprofils vollständig mit einer Schale abzudecken.

Zur Verbesserung der Formhaltigkeit und Festigkeit der aus Schaumstoffkern und Schalen zusammengesetzten Profile wird vorgeschlagen, die Schalen mit Aufnahmenuten zum Einstecken des Schaumstoffkernes auszubilden und am Schaumstoffkern entsprechend vorspringende Partien auszubilden, die die Montage und den Zusammenhalt erleichtern.

Mit der Erfindung wird es möglich, Fensterrahmen zu schaffen, die einen sehr geringen Wärmedurchgangskoeffizienten bis unter 0,7 W/m²K aufweisen.

Die erfindungsgemäßen Profile mit einem Kern aus Hartschaumstoff und einer Schale aus Holz können nach folgendem Verfahren hergestellt werden:
a) Kernprofile aus einem Hartschaumstoff extrudiert oder aus einem extrudierten Hartschaumstoff geschnitten und profiliert werden,
b) Holzschalen für die Wetterseite und Raumseite und Falzseite für Blendrahmenprofil und Flügelrahmenprofil und Glasleiste profiliert werden,
c) auf die Holzschalen auf die Verbindungsflächen zu den Kernen ein Klebemittel beispielsweise mittels Rollen aufgetragen wird,
d) gegebenenfalls auf die Verbindungsflächen der Kerne zu den Holzschalen ein Primer aufgetragen wird,
e) die Holzschalen und ein Kern zu dem jeweils gewünschten Profil zusammengefügt werden und in einer Presse unter Druck mit oder ohne Wärmezufuhr unter gegebenenfalls Ausschäumen mit Aushärten des Klebemittels während mindestens 30 Minuten verpreßt werden und
f) die hergestellten Profile auf Maß nachprofiliert sowie zusätzliche Profilierungen an den Holzschalen, wie zum Beispiel Aufnahmenuten für Dichtungen, ausgeführt werden,
g) die so hergestellten Profile abschnittsweise nach vorgegebenen gewünschten Fenstermaßen abgelängt bzw. auf Gehrung abgeschnitten werden und
h) gegebenenfalls jetzt oder später Löcher und Kanäle in die Profile als Lüftungs- oder Entwässerungskanäle gebohrt werden und
k) die Profilabschnitte zu Rahmen zusammengefügt und an den Ecken verbunden werden, zum Beispiel unter Ausbildung von Minizinken, die verklebt werden oder mittels Verdübelung oder Feder/Keilverbindungen,
l) und eine Oberflächenveredelung der Profile jetzt oder später durchgeführt wird, wie Putzen, Grundieren, Aufbringen einer Spritzlasur, Lackieren,
m) danach Dichtungen in die Rahmen eingebracht werden,
n) Beschläge an Blendrahmen und Flügelrahmen angebracht werden,
o) die Verglasung eingesetzt wird, Glasleisten eingebracht, befestigt und versiegelt werden.

Die Erfindung wird nachfolgend in der Zeichnung anhand von Ausführungsbeispielen erläutert. Es zeigen
- Fig. 1: Querschnitt durch einen Fensterrahmen
- Fig. 2: Querschnitt durch einen Fensterrahmen mit Profilen mit äußeren und inneren Holzschalen sowie Falzprofilen
- Fig. 3: Querschnitt durch Varianten des Fensterrahmens gemäß Fig. 2 durch Einsatz von Kunststoff für die Schalen der Profile
- Fig. 4: Querschnitt durch einen Fensterrahmen mit Profilen mit kombinierten Holz-Kunststoff-Schalen.

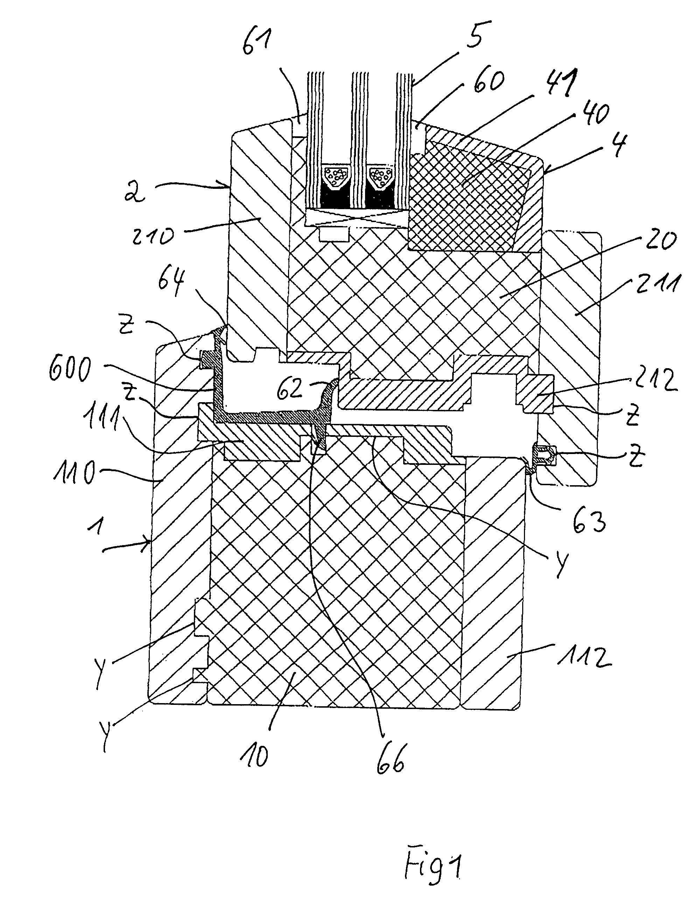

In der Fig. 1 ist eine Möglichkeit der Ausbildung eines Fensterrahmens aus erfindungsgemäßen hochwärmegedämmten Profilen dargestellt, wobei das Blendrahmenprofil 1 und das Flügelrahmenprofil 2 jeweils einen Kern 10 bzw. 20 aus Polyurethan-Integralhartschaum beispielsweise aufweisen, der mit äußeren und inneren Schalen 110, 112 bzw. 210, 211 aus Holz abgedeckt ist. An den einander zugekehrten Falzseiten des Blendrahmenprofils 1 und Flügelrahmenprofils 2 ist jeweils eine Blendrahmenfalzschale 111 bzw. Flügelrahmenfalzschale 212 von der äußeren zur inneren Schale reichend und den Schaumstoffkern vollständig abdeckend vorgesehen. Die Falzschalen 111 bzw. 112 sind jeweils einseitig in einer Aufnahmenut Z der äußeren bzw. inneren Schale des Profils 1 bzw. 2 formschlüssig gefaßt. Die Dichtungsfunktion zwischen Blendrahmen und Flügelrahmen übernimmt das Dichtungsprofil 600, beispielsweise aus EPDM, das etwa U-förmig ausgebildet ist und sowohl die Mitteldichtung 62 als auch die äußere Anschlagdichtung 64 jeweils an einem Ende angeformt aufweist. Das Dichtungsprofil 600 ist mit der falzseitigen Blendrahmenfalzschale 111 verbunden und zum einen in eine Aufnahmenut Z der äußeren Schale 110 als auch mit einem weiteren Vorsprung 66 an der Falzseite des Blendrahmenprofils 1 eingerastet. Zudem kann das Dichtungsprofil 600 noch an der Anlageseite am Blendrahmenprofil 1 beispielsweise mittels eines Klebemittels haftfest verbunden sein.

Auch die Glasleiste 4 ist wärmegedämmt mit einer äußeren Schale 4 beispielsweise aus Holz und einem Schaumstoffkern 40 aus einem Polyurethan-Integralhartschaum ausgebildet. Schale 41 und Schaumstoffkern 40 können ebenfalls mittels eines Klebemittels haftfest miteinander verbunden sein. Die wärmegedämmte Glasleiste 4 bietet zusätzlich eine verbesserte Wärmedämmung im Bereich der Anlage an der Verglasung 5 durch einen relativ hohen Glaseinstand. Auf diese Weise wird die Kältebrücke im Bereich Glasrandverbund vermieden. Die Verglasung ist gegenüber der Glasleiste 4 bzw. dem Anschlag des Flügelrahmenprofils 2 mittels Dichtungen 60 bzw. 61, beispielsweise aus Silikon abgedichtet.

Das Profil 1 weist einen im wesentlichen rechteckigen quaderförmigen Kern 10 aus einem Hartschaumstoff, beispielsweise einem Polystyrolschaumstoff auf, der eine Rohdichte von etwa 45 kg/m³ aufweist, einen Rechenwert der Wärmeleitfähigkeit nach DIN 4108 von 0,03 bis 0,035 W/mK, eine Druckfestigkeit nach DIN 53421 von 0,70 N/mm², eine Zugfestigkeit nach DIN 53292 von 1,0 N/mm² und eine Wasseraufnahme in sieben Tagen nach Wasserlagerung von 0,5 Volumen-% aufweist. Der Kern 10 ist an den Ecken mit rechtwinkligen Aussparungen versehen, in welche die Schalen 110, 111, 112, die aus einem witterungsbeständigen Holz, beispielsweise Nadelholz, hergestellt sind, eingreifen. Sowohl auf der Wetterseite als auch auf der Rauminnenseite sind Holzschalen 110, 112 einer Dicke von beispielsweise mindestens 15 mm vorgesehen, die zusammen mit dem Kern 10 eine ausreichende Tragfestigkeit des damit herzustellenden Rahmens und eine hohe Wärmedämmung gewährleisten. Auf der Anschlußseite zum Mauerwerk ist das Profil 1 bündig abschließend ausgebildet, wobei auch der Kern 10 einen Teil der Anschlußseite bildet. Es ist aber auch möglich, diese Anschlußseite 12 gegebenenfalls zu profilieren.

Das Flügelrahmenprofil 2 weist einen Z-förmigen Querschnitt auf und ist an der Falzseite und an der der Verglasung zugewandten Seite profiliert. Auf der der Verglasung zugewandten Seite ist der Kern 20 nicht abgedeckt, sondern wird nachfolgend durch Einsetzen der Verglasung und der Glasleiste überdeckt.

Auf der Innenseite ist des weiteren zusätzlich die Anschlagdichtung 63 in die Nut des Flügelrahmenprofiles 2 eingezogen. Auf diese Weise wird eine hohe Dichtigkeit des Fensters erreicht.

Die Profile 1, 2 und 4 werden in großen Längen hergestellt und aus diesen Profilen werden dann die für die herzustellenden Fenster oder Türen erforderlichen Abschnitte abgelängt. Die Profile werden vorzugsweise auf Gehrung geschnitten und die Eckverbindungen auf Gehrung hergestellt, beispielsweise durch zusätzliche Profilierung der Ecken mit Minizinken und Verkleben derselben oder auch durch Verdübeln oder andere bekannte Verbindungsmethoden, wie sie beispielsweise aus der Holztechnik bekannt sind. Auch zum Verkleben der Ecken kann ein Einkomponenten-Polyurethankleber wie für das Verbinden der Schaumstoffkerne mit den Holzschalen eingesetzt werden.

In Verbindung mit dem Einsatz einer hochwertigen hoch wärmedämmenden Dreischeibenisolierverglasung, den hoch wärmegedämmten Flügel und Blendrahmen mit den Profilen 1 und 2 und der Glasleiste 4 gelingt es, ein Fenster zu schaffen, das als Passivenergiefenster wirkt und damit die für Raumbeheizung notwendigen Energien erheblich reduziert. Ebenfalls können mit den erfindungsgemäßen Profilen Türen mit den gleichen Eigenschaften und Vorteilen hergestellt werden.

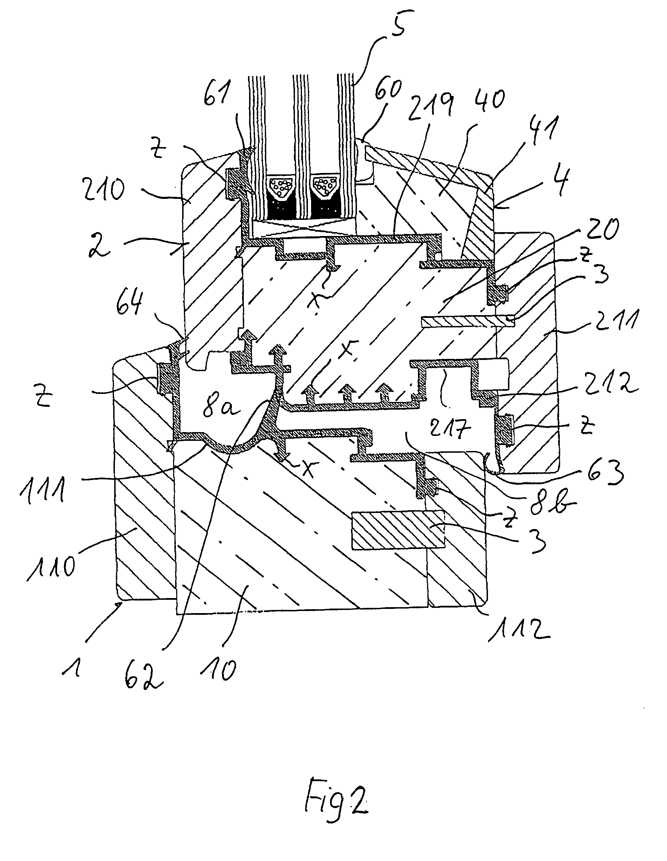

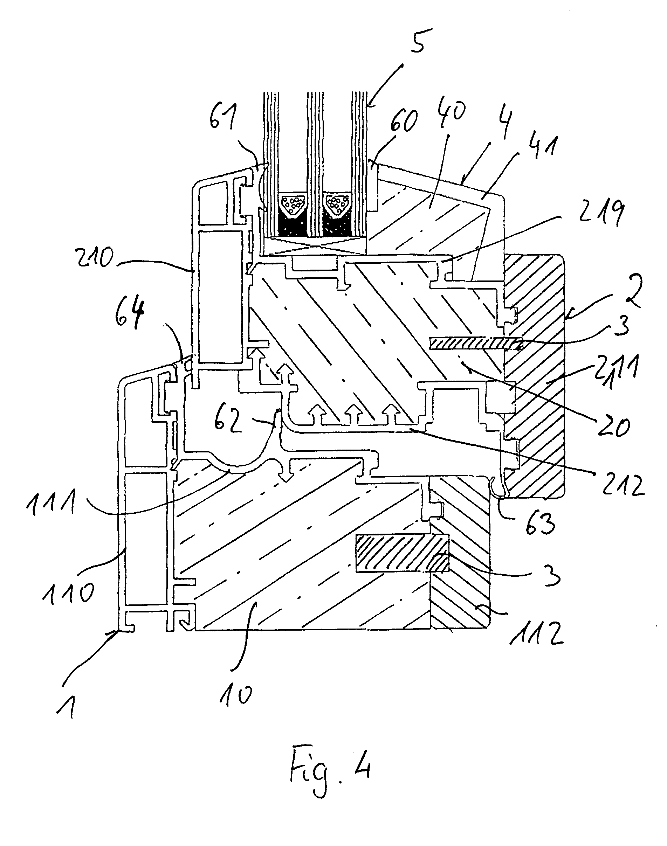

Fig. 2 zeigt die weitere Möglichkeit der Ausbildung eines Fensterrahmens aus erfindungsgemäß hochwärmegedämmten Profilen mit einem Schaumstoffkern und außenseitigen Schalen aus Holz, bei denen im Gegensatz zu dem Ausführungsbeispiel nach Fig. 4 die Falzseiten der Schaumstoffkerne 10 bzw. 20 des Blendrahmenprofils 1 und Flügelrahmenprofils 2 mit Falzschalen 111, 212 und 219 abgedeckt sind. Die Falzschalen 111, 212, 219 sind beispielsweise aus EPDM durch Extrusion als Profile hergestellt und werden dann mit den Schaumstoffkernen verbunden oder aber die Schaumstoffkerne 10 bzw. 20 werden mit den Falzschalen durch Einschäumen verbunden. Die Blendrahmenfalzschale 111, Flügelrahmenfalzschale 212 und Glasfalzschale 219 sind bevorzugt an ihrer dem Schaumstoffkern zugewandten Seite mit vorstehenden Verankerungsstegen X ausgebildet, um einen festen dauerhaften Verbund zu sichern. Des weiteren sind an den Falzschalen auch die erforderlichen Dichtungen durch Anformung ausgebildet. An der Blendrahmenfalzschale 111 ist die äußere Anschlagdichtung 64 angeformt sowie die Mitteldichtung 62, an der Flügelrahmenfalzschale 212 ist die innere Anschlagdichtung 63 angeformt und an der Glasfalzschale 219 die äußere Glasdichtung 61.

Zusätzlich sind die Falzschalen 111, 212, 219 noch mittels Vorsprüngen in entsprechenden nutförmigen Ausnehmungen Z der äußeren und inneren Schalen 110, 111, 210, 211 des Blendrahmenprofils und Flügelrahmenprofils verankert.

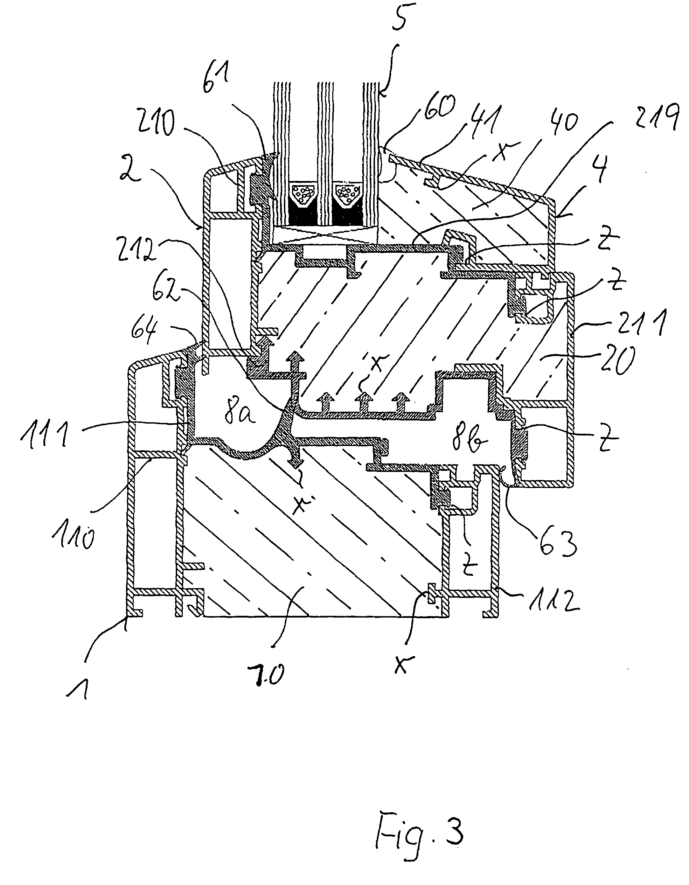

In der Fig. 3 ist die weitere Variante eines Fensterrahmens aus erfindungsgemäß aufgebautem Blendrahmenprofil 1 und Flügelrahmenprofil 2 mit Verglasung 5 und Glasleiste 4 dargestellt, bei der die äußeren Schalen der Profile aus einem thermoplastischen Kunststoff, wie beispielsweise Hart-PVC oder Polypropylen, hergestellt sind. Die äußeren und inneren Schalen 110, 112 bzw. 210, 211 bzw. 41 des Blendrahmenprofils 1, Flügelrahmenprofils 2 und Glasleiste 4 können als Hohlprofile oder teilweise als Hohlprofile hergestellt sein, wobei der Schaumstoffkern vorgeschäumt und mit den Profilteilen und falzseitigen Schalen anschließend mittels eines Haftvermittlers verbunden wird oder aber auch eine Verbindung durch Einschäumen des Schaumstoffkernes in die eine äußere Ummantelung bildenden Schalen möglich ist. Auch bei dem Fensterrahmen gemäß Fig. 3 sind das Blendrahmenprofil 1 und Flügelrahmenprofil 2 an ihren Falzseiten mit Blendrahmenfalzschalen 111, Flügelrahmenfalzschale 212 und Glasfalzschale 219, wie bei Fig. 2 erläutert, ausgestattet. Die Schale 41 der Glasleiste 4 weist ebenfalls auf ihrer Innenseite Verankerungsstege X auf, um einen besseren Verbund mit dem Schaumstoffkern zu ermöglichen.

In der Fig. 4 ist an einem weiteren Ausführungsbeispiel dargestellt, wie Blendrahmenprofil 1 und Flügelrahmenprofil 2 für ein Fenster dergestalt aufgebaut sein können, daß beispielsweise auf der Innenseite ein Holzlook entsteht mit Holzschalenverkleidung und auf der Außenseite eine witterungsbeständige Schale aus Kunststoff, wie Hart-PVC, vorgesehen ist. Das Blendrahmenprofil 1 weist somit eine außenseitige Schale 110 aus Kunststoff, den Schaumstoffkern 10 sowie die innenseitige Schale 112 aus Holz auf und ist mit einer falzseitigen Falzschale 111, beispielsweise aus Gummi oder Synethesekautschuk, die integriert die Mitteldichtung 62 und die äußere Anschlagdichtung 64 umfaßt, ausgerüstet. Das Flügelrahmenprofil 2 hingegen weist wiederum auf der Innenseite die Schale 211 aus Holz und auf der Außenseite die äußere Schale 210 aus einem Kunststoffhohlprofil auf, die den Kern 20 aus einem geschlossenzelligen Hartschaum begrenzen. Die beiden Falzseiten des Flügelrahmenprofils 2 sind wiederum mittels der Glasfalzschale 219 und der Flügelrahmenfalzschale 212, die in dem Schaumstoffkern 20 und an den äußeren und inneren Schalen 210, 211 verankert sind, abgedeckt. Zur Verstärkung der Profile 1 bzw. 2 sind zusätzlich Verstärkungsleisten 3, beispielsweise aus einem hochfesten Kunststoff in den Schaumstoffkern eingebracht, wobei sie gleichzeitig formschlüssig in der angrenzenden, hier inneren Schale in einer Aufnahmenut gehaltert sind.

Erfindungsgemäß können die äußeren und inneren Schalen des Blendrahmenprofils und Flügelrahmenprofils sowie der Glasleiste aus Holz, Aluminium oder einem geeigneten Kunststoff, wie Hart-PVC, bestehen, wobei gleiche und verschiedene Materialien kombinierbar sind für Außenschalen und Innenschalen.

Die Dichtungsleisten bzw. Dichtungen werden bevorzugt aus EPDM, Gummi, PVC, Silikon oder anderen geeigneten elastischen witterungsbeständigen Materialien hergestellt.

Die am Blendrahmenprofil und Flügelrahmenprofil vorgesehenen falzseitigen Schalen sind funktional mit Beschlagnuten, Wasserablaufrinnen und dergleichen einschließlich Dichtungen ausgebildet. Die falzseitigen Schalen am Blendrahmenprofil und Flügelrahmenprofil dienen zugleich dem Schutz des isolierenden wärmedämmenden Schaumstoffkernes.

## Patentansprüche

1. Fenster oder Tür mit Blendrahmen, Flügelrahmen und in den Blendrahmen oder Flügelrahmen eingesetzter mittels Glasleiste gehaltener Verglasung, wobei die Blendrahmen und Flügelrahmen aus auf vorgegebene Maße abgelängten und durch Verbinden an den Ecken zu den Rahmen zusammengefügten Blendrahmenprofilen (1) bzw. Flügelrahmenprofilen (2) hergestellt sind und die Blendrahmen-bzw. Flügelrahmenprofile einen Kern (10, 20) aus geschlossenzelligem Hartschaumstoff aufweisen und der Kern zumindest auf der Außenseite und der Innenseite mit einer äußeren bzw. inneren Schale (110, 112; 210, 211) aus Holz, Aluminium oder Kunststoff abgedeckt ist, und der Kern des Blendrahmenprofiles bzw. Flügelrahmenprofiles jeweils auf seiner dem Flügelrahmen bzw. Blendrahmen zugewandten Falzseite mit einer von der äußeren Blendrahmenschale (110) bis zur inneren Blendrahmenschale (112) bzw. von der äußeren Flügelrahmenschale (210) bis zur inneren Flügelrahmenschale (211) reichenden Blendrahmenfalzschale (111) bzw. Flügelrahmenfalzschale (212) abgedeckt ist und die Blendrahmenfalzschale (111) mit mindestens einer angeformten Dichtung (62) ausgestattet ist, **dadurch gekennzeichnet, daß** die Blendrahmenfalzschale (111) und die Flügelrahmenfalzschale (212) jeweils einseitig in einer Aufnahmenut (Z) der äußeren Schale (110) des Blendrahmenprofils (1) bzw. der inneren Schale (211) des Flügelrahmenprofils (2) formschlüssig gefaßt sind und daß das die Glasleiste (4) bildende Profil eine zumindest die Sichtflächen umfassende äußere Schale (41) und einen mit der Schale haftfest verbundenen Kern (40) aus geschlossenzelligem Schaumststoff aufweist und einen hohen Glaseinstand zur Vermeidung einer Kältebrücke im Bereich des Glasrandverbundes ermöglicht und die Kerne (10, 20, 40) für das Blendrahmenprofil (1) und das Flügelrahmenprofil (2) und die Glasleiste (4) aus einem Hartschaumstoff mit einer Druckfestigkeit nach DIN 53421 von mindestens 0,40 N/mm², vorzugsweise mindestens 0,50 N/mm², und einer Zugfestigkeit nach DIN 53292 von mindestens 0,7 N/mm², vorzugsweise größer 0,8/mm², und einem Rechenwert der Wärmeleitfähigkeit nach DIN 4108 unter 0,040 W/mK und einer Wasseraufnahme in sieben Tagen Wasserlagerung nach DIN 53428 von kleiner 2 Volumen-% gefertigt sind, wie einem Polyurethan-Hartschaum oder extrudierten Polystyrol-Hartschaum und der Fensterrahmen einen Wärmedurchgangskoeffizienten bis unter 0,7 W/m²K aufweist.

2. Fenster oder Tür nach Anspruch 1,
**dadurch gekennzeichnet, daß** der Kern (20) des Flügelrahmenprofiles auf seiner der Verglasung (5) zugewandten Seite mit einem von der äußeren Flügelrahmenschale (210) bis zur inneren Flügelrahmenschale (211) reichenden Glasfalzschale (219) abgedeckt ist.

3. Fenster oder Tür nach Anspruch 1 oder 2,
**dadurch gekennzeichnet, daß** Blendrahmenfalzschale (111), die Flügelrahmenfalzschale (212) und die Glasfalzschale (219) aus einem witterungsbeständigen thermoplastisch verarbeitbaren und extrudierbaren Kunststoff, wie EPDM, Polyamid, PVC oder aus einem glasfaserverstärkten Kunststoff hergestellt sind.

4. Fenster oder Tür nach Anspruch 1,
**dadurch gekennzeichnet, daß** die Blendrahmenfalzschale (111) und/oder die Flügelrahmenfalzschale (212) und/oder die Glasfalzschale (219) mit einer angeformten äußeren bzw. inneren Anschlagdichtung (64, 63, 61) und/oder einer angeformten Mitteldichtung (62) ausgestattet sind, wobei die Dichtungen (64, 63, 62, 61) aus dem gleichen ausreichend elastischen Material wie das Material der Schalen (111, 212, 219) oder aus einem weicher eingestellten Material angeformt sind.

5. Fenster oder Tür nach einem der Ansprüche 1 bis 4,
**dadurch gekennzeichnet, daß** die Blendrahmenfalzschale, Flügelrahmenfalzschale und Glasfalzschale auf ihrer dem Kern (10, 20) bzw. der Blendrahmenschale bzw. Flügelrahmenschale zugewandten Seite vorstehende Verankerungsstege (X) aufweisen.

6. Fenster oder Tür nach einem der Ansprüche 1 bis 5, **dadurch**
**gekennzeichnet, daß** die äußeren und inneren Schalen des Blendrahmenprofils und Flügelrahmenprofils sowie der Glasleiste aus Holz, Aluminium oder einen geeigneten Kunststoff, wie Hart-PVC, bestehen, wobei gleiche und verschiedene Materialien für die Außenschalen und Innenschalen kombinierbar sind.

7. Fenster oder Tür nach einem der Ansprüche 1 bis 6,
**dadurch gekennzeichnet, daß** die den Kern (10, 20) des Blendrahmenprofils (1) bzw. Flügelrahmenprofils (2) außen und innen abdeckenden Schalen (110, 112; 210, 211) aus Holz und die den Kern (10, 20) an den Falzseiten abdeckende Blendrahmenfalzschale (111), Flügelrahmenfalzschale (212) bzw. Glasfalzschale (219) aus einem thermoplastischen Kunststoff oder natürlichen oder Synthese-Kautschuk oder Gummi gefertigt sind.

8. Fenster oder Tür nach einem der Ansprüche 1 bis 6,
**dadurch gekennzeichnet, daß** die den Kern (10, 20) des Blendrahmenprofiles (1) bzw. Flügelrahmenprofils (2) außen und innen abdeckenden Schalen (110, 112; 210, 211) aus Kunststoffprofilen und die den Kern (10, 20) an den Falzseiten abdeckende Blendrahmenfalzschale (111), Flügelrahmenfalzschale (212) bzw. Glasfalzschale (219) aus einem thermoplastischen Kunststoff oder natürlichen oder Synthese-Kautschuk oder Gummi gefertigt sind.

9. Fenster oder Tür nach einem der Ansprüche 1 bis 6,
**dadurch gekennzeichnet, daß** die den Kern (10, 20) des Blendrahmenprofiles (1) bzw. Flügelrahmenprofiles (2) außen und innen abdeckenden Schalen (110, 112; 210, 211) aus Holz und die den Kern (10, 20) an den Falzseiten abdeckenden Blendrahmenprofilschalen (111) und Flügelrahmenprofilschalen (212) aus Holz gefertigt sind.

10. Fenster oder Tür nach einem der Ansprüche 1 bis 6,
**dadurch gekennzeichnet, daß** die den Kern (10, 20) des Blendrahmenprofiles (1) bzw. Flügelrahmenprofils (2) außen abdeckenden Schalen (110, 210) aus Kunststoff und die den Kern (10, 20) innen abdeckenden Schalen (112, 211) aus Holz gefertigt sind.

11. Fenster oder Tür nach einem der Ansprüche 1 bis 10,
**dadurch gekennzeichnet, daß** der Kern des Blendrahmenprofils, Flügelrahmenprofils, Glasleiste mit den äußeren und/oder inneren Schalen und gegebenenfalls den falzseitigen Schalen haftfest mittels eines Klebemittels, wie eines Einkomponentenklebers auf Polyurethanbasis feuchtigkeitsvernetzender Art verbunden ist.

12. Fenster oder Tür nach einem der Ansprüche 1 bis 11,
**dadurch gekennzeichnet, daß** die äußeren und inneren Schalen des Blendrahmenprofils (1) und Flügelrahmenprofils (2) an ihrer dem Kern (10, 20) zugewandten Seite Aufnahmenuten oder Absätze zum formschlüssigen Einsetzen des entsprechend profilierten Kernes aufweisen.

13. Fenster oder Tür nach einem der Ansprüche 1 bis 12,
**dadurch gekennzeichnet, daß** der Kern (10) zumindest des Blendrahmenprofiles (1) mindestens eine Verstärkungseinlage (3) enthält, die der Fixierung einer Verschraubung von Beschlägen und/oder Glasleiste und/oder Verankerungen dient.

## Claims

1. A window or door with a casing, a casement and a glazing that is inserted into the casing or the casement and held by means of a glazing strip, wherein the casings and the casements are respectively manufactured from casing profiles (1) and casement profiles (2) that are cut to a predetermined length and connected at the corners in order to form the casing/casement, wherein the casing profiles and the casement profiles contain a core (10, 20) of a closed-cell rigid expanded plastic and the core is covered on at least the outer side and the inner side with an outer and an inner shell (110, 112; 210, 211) of wood, aluminum or plastic, wherein the respective core of the casing profile and the casement profile is covered on its rabbet side that respectively faces the casement or the casing with a casing rabbet shell (111) or a casement rabbet shell (212) which respectively extends from the outer casing shell (110) to the inner casing shell (112) and from the outer casement shell (210) to the inner casement shell (211), and wherein at least one gasket (62) is integrally formed onto the casing rabbet shell (111), **characterized by** the fact that the casing rabbet shell (111) and the casement rabbet shell (212) are respectively fitted in a positive fashion into a receptacle groove (Z) of the outer shell (110) of the casing profile (1) or the inner shell (211) of the casement profile (2), by the fact that the profile which forms the glazing strip (4) contains an outer shell (41) that encompasses at least the visible surfaces and a core (40) of closed-cell expanded plastic which is rigidly bonded to the shell, wherein said profile protrudes relatively far over the glass in order to prevent a thermal bridges within the region of the glass edge, by the fact that the cores (10, 20, 40) for the casing profile (1) and the casement profile (2) and the glazing strip (4) are manufactured from a rigid expanded plastic with a compressive strength according to DIN 53421 of at least 0.40 N/mm², preferably at least 0.50 N/mm², a tensile strength according to DIN 53292 of a least 0.7 N/mm², preferably greater than 0.8 N/mm², a calculated thermal conductivity value according to DIN 4108 of less than 0.040 W/mK and a water absorption after being stored in water for seven days according to DIN 53428 of less than 2 vol.%, for example, a rigid polyurethane foam or an extruded rigid polystyrene foam, and by the fact that the window frame has a heat transition coefficient below 0.7 W/m²K.

2. The window or door according to Claim 1, **characterized by** the fact that the core (20) of the casement profile is covered on its side that faces the glazing (5) with a glass rabbet shell (219) that extends from the outer casement shell (210) to the inner casement shell (211).

3. The window or door according to Claim 1 or 2,
**characterized by** the fact that the casing rabbet shell (111), the casement rabbet shell (212) and the glass rabbet shell (219) are manufactured from a weather-resistant plastic that can be extruded and processed in a thermoplastic fashion, for example, EPDM, polyamide, PVC or a plastic that is reinforced with glass fibers.

4. The window or door according to Claim 1, **characterized by** the fact that the casing rabbet shell (111) and/or the casement rabbet shell (212) and/or the glass rabbet shell (219) is/are provided with an outer and an inner rabbet gasket (64, 63, 61) and/or a center gasket (62) that is/are integrally formed onto the respective shell, wherein the gaskets (64, 63, 62, 61) are manufactured from the same sufficiently elastic material as that of the shells (111, 212, 219) or from a softer material.

5. The window or door according to one of Claims 1 - 4, **characterized by** the fact that the casing rabbet shell, the casement rabbet shell and the glass rabbet shell contain protruding anchoring webs (X) on their side that respectively faces the core (10, 20) or the casing shell or the casement shell.

6. The window or door according to one of Claims 1 - 5, **characterized by** the fact that the outer and the inner shells of the casing profile and the casement profile, as well as of the glazing strip, consist of wood, aluminum or a suitable plastic, for example, rigid PVC, wherein identical and different materials may be combined for the outer shells and the inner shells.

7. The window or door according to one of Claims 1 - 6, **characterized by** the fact that the shells (110, 112; 210, 211) which cover the core (10, 20) of the casing profile (1) or the casement profile (2) on the outside and the inside are manufactured from wood, and by the fact that the casing rabbet shell (111), the casement rabbet shell (212) and the glass rabbet shell (219) which cover the core (10, 20) on the rabbet side are manufactured from a thermoplastic plastic material or natural or synthetic caoutchouc or rubber.

8. The window or door according to one of Claims 1 - 6, **characterized by** the fact that the shells (110, 112; 210, 211) which cover the core (10, 20) of the casing profile (1) or the casement profile (2) on the outside and the inside are manufactured from plastic profiles, and by the fact that the casing rabbet shell (111), the casement rabbet shell (212) and the glass rabbet shell (219) which cover the core (10, 20) on the rabbet side are manufactured from a thermoplastic plastic material or natural or synthetic caoutchouc or rubber.

9. The window or door according to one of Claims 1 - 6, **characterized by** the fact that the shells (110, 112; 210, 211) which cover the core (10, 20) of the casing profile (1) or the rabbet profile (2) on the outside and the inside are manufactured from wood, and by the fact that the casing profile shells (111) and the casement profile shells (212) which cover the core (10, 20) on the rabbet side are manufactured from wood.

10. The window or door according to one of Claims 1 - 6, **characterized by** the fact that the shells (110, 210) which cover the core (10, 20) of the casing profile (1) and the casement profile (2) on the outside are manufactured from plastic, and by the fact that the shells (112, 211) which cover the core (10, 20) on the inside are manufactured from wood.

11. The window or door according to one of Claims 1 - 10, **characterized by** the fact that the core of the casing profile, the casement profile and the glazing strip is rigidly bonded to the outer and/or inner shells and, if applicable, the shells on the rabbet side by means of an adhesive, for example, a single-component adhesive on the basis of polyurethane which crosslinks moisture.

12. The window or door according to one of Claims 1 - 11, **characterized by** the fact that the outer and inner shells of the casing profile (1) and the casement profile (2) contain receptacle grooves or shoulders for positively inserting the correspondingly profiled core, namely on their side that faces the core (10, 20).

13. The window or door according to one of Claims 1 - 12, **characterized by** the fact that the core (10) of at least the casing profile (1) contains at least one reinforcing insert (3) that serves for stabilizing a screw connection with fittings and/or the glazing strip and/or anchoring elements.

## Revendications

1. Fenêtre ou porte avec châssis dormant, vantail et vitrage inséré dans le châssis dormant ou le vantail maintenu au moyen d'un liteau de vitre, les châssis dormants et vantaux étant fabriqués à partir de profils de châssis dormants (1) ou profils de vantaux (2) coupés à une longueur prédéfinie et assemblés aux châssis par liaison aux angles et les profils de châssis dormants ou les profils de vantaux présentant un noyau (10, 20) en mousse dure à cellules fermées et ce noyau étant recouvert, du moins sur sa face extérieure et sa face intérieure, d'une coque externe ou interne (110, 112 ; 210, 211) en bois, aluminium ou matière plastique, et le noyau du profil du châssis dormant ou le noyau du vantail étant respectivement recouvert, sur son côté de feuillure tourné vers le vantail ou le châssis dormant, d'une coque de feuillure de châssis dormant (111) ou d'une coque de feuillure de vantail (212) allant de la coque externe du châssis dormant (110) à la coque interne du châssis dormant (112) ou de la coque externe du vantail (210) à la coque interne du vantail (211), et la coque de feuillure du châssis dormant (111) étant équipée d'au moins un joint formé dessus (62), **caractérisée en ce que** la coque de feuillure de châssis dormant (111) et la coque de feuillure de feuillure de vantail (212) sont respectivement en prise mécanique d'un côté dans une rainure réceptrice (Z) de la coque externe (110) du profil de châssis dormant (1) ou de la coque interne (211) du profil de vantail (2) et que le profil constituant le liteau de vitre (4) présente une coque externe (41) entourant au moins les surfaces de visibilité et un noyau (40) en mousse à cellules fermées relié en adhérence à la coque et permet d'englober une grande hauteur de verre pour éviter le passage du froid dans la zone de jonction du bord de la vitre et que les noyaux (10, 20, 40) pour le profil de châssis dormant (1) et le profil de vantail (2) et le liteau de vitre (4) sont fabriqués en mousse dure avec une résistance à la pression selon la DIN 53421 d'au moins 0,40 N/mm², de préférence au moins 0,50 N/mm² et une résistance à la traction selon la DIN 53292 d'au moins 0,7 N/mm², de préférence de plus de 0,8/mm², et une valeur arithmétique de conductibilité thermique selon la DIN 4108 en dessous de 0,040 W/mK ainsi qu'une absorption d'eau, pendant sept jours de maintien dans l'eau selon la DIN 53428, inférieure à 2 % du volume, comme une mousse dure de polyuréthane ou une mousse dure extrudée de polystyrène et que le châssis de fenêtre présente un coefficient de transition thermique atteignant moins de 0,7 W/m²K.

2. Fenêtre ou porte selon la revendication 1,
**caractérisée en ce que** le noyau (20) du profil de vantail est recouvert, sur sa face tournée vers le vitrage (5), d'une coque de feuillure de vitre (219) allant de la coque externe de vantail (210) à la coque interne de vantail (211).

3. Fenêtre ou porte selon la revendication 1 ou 2,
**caractérisée en ce que** la coque de feuillure de châssis dormant (111), la coque de feuillure de vantail (212) et la coque de feuillure de vitre (219) sont fabriquées à partir d'une matière thermoplastique pouvant être transformée et extrudée résistante aux intempéries, comme l'EPDM, le polyamide, le PVC ou en matière plastique renforcée par fibres de verre.

4. Fenêtre ou porte selon la revendication 1,
**caractérisée en ce que** la coque de feuillure de châssis dormant (111) et/ou la coque de feuillure de vantail (212) et/ou la coque de feuillure de vitre (219) sont équipées d'un joint de butée (64, 63, 61) formé à l'extérieur ou à l'intérieur et/ou d'un joint central (62) formé, les joints (64, 63, 62, 61) étant formés dans la même matière suffisamment élastique que la matière des coques (111, 212, 219) ou dans une matière d'une qualité plus molle.

5. Fenêtre ou porte selon une des revendications 1 à 4,
**caractérisée en ce que** la coque de feuillure de châssis dormant, la coque de feuillure de vantail et la coque de feuillure de vitre présentent, sur leur face tournée vers le noyau (10, 20) ou vers la coque de châssis dormant ou la coque de vantail, des traverses d'ancrage proéminentes (X).

6. Fenêtre ou porte selon une des revendications 1 à 5,
**caractérisée en ce que** les coques externes et internes du profil de châssis dormant et du profil de vantail ainsi que du liteau de vitre consistent en bois, aluminium ou en une matière plastique appropriée, comme du PVC dur, des matières identiques ou différentes pouvant être combinées pour les coques externes et les coques internes.

7. Fenêtre ou porte selon une des revendications 1 à 6,
**caractérisée en ce que** les coques (110, 112 ; 210, 211) recouvrant à l'extérieur et à l'intérieur le noyau (10, 20) du profil de châssis dormant (1) ou du profil de vantail (2) sont fabriquées en bois et que la coque de feuillure de châssis dormant (111), la coque de feuillure de vantail (212) ou la coque de feuillure de vitre (219) recouvrant le noyau (10, 20) sur les côtés à feuillure sont fabriquées en matière thermoplastique ou en gomme ou caoutchouc naturel ou synthétique.

8. Fenêtre ou porte selon une des revendications 1 à 6,
**caractérisée en ce que** les coques (110, 112 ; 210, 211) recouvrant à l'extérieur et à l'intérieur le noyau (10, 20) du profil de châssis dormant (1) ou du profil de vantail (2) sont fabriquées à partir de profils en matière plastique et que la coque de feuillure de châssis dormant (111), la coque de feuillure de vantail (212) ou la coque de feuillure de vitre (219) recouvrant le noyau (10, 20) sur les côtés à feuillure sont fabriquées en matière thermoplastique ou en gomme ou caoutchouc naturel ou synthétique.

9. Fenêtre ou porte selon une des revendications 1 à 6,
**caractérisée en ce que** les coques (110, 112 ; 210, 211) recouvrant à l'extérieur et à l'intérieur le noyau (10, 20) du profil de châssis dormant (1) ou du profil de vantail (2) sont fabriquées en bois et que les coques de profils de châssis dormant (111) et les coques de profil de vantail (212) recouvrant le noyau (10, 20) sur les côtés à feuillure sont fabriquées en bois.

10. Fenêtre ou porte selon une des revendications 1 à 6,
**caractérisée en ce que** les coques (110, 210) recouvrant à l'extérieur le noyau (10, 20) du profil de châssis dormant (1) ou du profil de vantail (2) sont fabriquées en matière plastique et que les coques (112, 211) recouvrant le noyau (10, 20) à l'intérieur sont fabriquées en bois.

11. Fenêtre ou porte selon une des revendications 1 à 10,
**caractérisée en ce que** le noyau du profil de châssis dormant, du profil de vantail, du liteau de vitre est relié en adhérence avec les coques externes et/ou internes et, le cas échéant, les coques du côté des feuillures au moyen d'une colle, telle qu'une colle à composante unique à base de polyuréthane diffusant l'humidité.

12. Fenêtre ou porte selon une des revendications 1 à 11,
**caractérisée en ce que** les coques externes et internes du profil de châssis dormant (1) et du profil de vantail (2), sur leur face tournée vers le noyau (10, 20), présentent des rainures réceptrices ou des retraits pour l'insertion mécanique du noyau profilé en correspondance.

13. Fenêtre ou porte selon une des revendications 1 à 12,
**caractérisée en ce que** le noyau (10) du profil de châssis dormant (1) au moins contient au moins un insert de renfort (3), qui sert à la fixation d'un assemblage vissé de ferrures et/ou d'un liteau de vitre et/ou d'ancrages.
